# FASCICULE DE BREVET EUROPEEN

(11) **EP 0 420 726 B1**
(45) Date de publication et mention de la délivrance du brevet: **21.06.1995**
(21) Numéro de dépôt: 90402597.0
(22) Date de dépôt: 20.09.1990
(51) Int. Cl.: B60R 21/16, B60R 21/26

(54) **Dispositif d'absorption de choc pour occupants d'un véhicule automobile et utilisation de ce dispositif**
Stossabsorbierende Einrichtung für die Insassen eines Kraftfahrzeuges und ihre Verwendung
Shock absorbing device for the passengers of a motor vehicle and the use of said device

(30) Priorité: 27.09.1989 FR 8912629
(43) Date de publication de la demande: 03.04.1991
(73) Titulaire: S.N.C. LIVBAG, 91710 Vert Le Petit (FR)
(72) Inventeur: Castagner, Bernard, F-77450 Coupvray (FR); Cord, Paul-Philippe, F-75009 Paris (FR); Doin, Bernard, F-78000 Versailles (FR); Kozyreff, Michel, F-76116 Catenay (FR)
(74) Mandataire: Pech, Bernard

(56) Documents cités:
- US-A- 3 532 358
- US-A- 3 715 131
- US-A- 3 892 425
- US-A- 4 265 468
- US-A- 4 830 401

## Description

La présente invention se rapporte au domaine de la sécurité automobile. Plus précisément l'invention concerne un dispositif de protection, par absorption de choc, des occupants d'un véhicule automobile en cas de collision. Le dispositif selon l'invention est constitué essentiellement par un générateur pyrotechnique de gaz, par un sac gonfable et par des organes de liaison permettant de relier ledit générateur de gaz au dit sac.

Il est connu d'assurer la sécurité des occupants d'un véhicule automobile en cas de collision au moyen d'un sac étanche de protection gonflé par un gaz, ledit sac venant s'interposer entre le corps ou le visage de l'occupant du véhicule et les parois du véhicule situées devant cet occupant de manière à empêcher ce dernier de venir s'écraser contre ces parois. Ces sacs gonfables sont en général gonflés par un générateur pyrotechnique de gaz relié d'une part à un détecteur de choc et d'autre part au dit sac. Un tel dispositif est par exemple décrit dans le brevet US-A-3 845 970 qui fait état d'un générateur de gaz relié à un sac gonfable étanche grâce à des tuyères qui assurent, par détente des gaz, le refroidissement de ces derniers ; c'est sur ce brevet que se fonde le préambule de la revendication 1. Ce type de solution permet bien d'amortir le mouvement vers l'avant du corps de l'occupant du véhicule.

Néanmoins ce type de solution présente l'inconvénient d'être d'un réglage difficile. En effet pour assurer un gonflement adapté du sac avec des gaz relativement refroidis on est obligé d'utiliser une quantité relativement importante de ces derniers ce qui risque, à la température où se trouvent néanmoins ces gaz, d'occasionner une détérioration de la base du sac qu'il est nécessaire de protéger contre les jets de gaz comme expliqué dans le brevet US-A-4 830 401. D'un autre côté si le sac est trop gonflé il ne présente plus suffisamment de propriétés amortissantes pour le corps de l'occupant du véhicule.

Afin de pallier à cet inconvénient, on a alors proposé des dispositifs analogues mais dans lesquels le sac gonfable est muni d'évents permettant, après gonflage, à l'excédent de gaz de s'échapper sous la pression du corps de l'occupant du véhicule dont l'amortissement est ainsi parfaitement assuré. On trouve de tels dispositifs décrits dans les brevets US 3 840 246 et US 4 805 930. Ce type de dispositif qui donne entière satisfaction en cas de choc unique présente néanmoins deux inconvénients majeurs.

D'une part comme du gaz provenant du générateur pyrotechnique est destiné à pénétrer à l'intérieur de l'habitacle du véhicule automobile grâce aux évents, ce gaz doit être non toxique et le plus froid possible. Ces deux considérations imposent le choix de compositions pyrotechniques génératrices de gaz à base d'azoture de sodium, comme expliqué par exemple dans le brevet US 3 865 660. Or les compositions pyrotechniques à base d'azoture de sodium ne sont pas sans inconvénients :
i) elles sont sensibles à l'humidité au plan de la toxicité et du vieillissement et doivent dons être parfaitement isolées dans le générateur de gaz de l'atmosphère ambiante,
ii) elles génèrent par combustion une quantité importante de résidus solides chauds, toxiques et corrosifs qui doivent être filtrés soigneusement avant l'entrée des gaz dans le sac,
iii) enfin l'azoture de sodium est un produit toxique dont la neutralisation en fin de vie du véhicule est délicate.

D'autre part, et il s'agit sans doute là de l'inconvénient majeur de ce type de solution, la protection de l'occupant du véhicule n'est pas assurée en cas de chocs multiples puisque le sac du fait des évents perd une partie non négligeable de son gaz après le premier choc.

On a cherché dans cette voie à avoir des dispositifs dont le sac ne se dégonfle pas totalement lors du premier choc et qui conservent une certaine efficacité en cas de chocs multiples. Une solution proposée consiste à utliser des sacs comprenant plusieurs enceintes dont certaines sont étanches et dont d'autres sont munies d'évents.

Ce type de solution, décrite par exemple dans le brevet US-A-3 907 327 présente cependant l'inconvénient de nécessiter une structure complexe à double enveloppe au moins pour le sac gonfable et d'être à la fois onéreuse et d'une mise en oeuvre relativement délicate.

L'homme de métier ne dispose donc pas à l'heure actuelle de dispositif simple de protection des occupants d'un véhicule automobile, constitué par un générateur pyrotechnique de gaz et par un sac gonfable qui soit à la fois amortissant dans toutes les conditions d'utilisation et qui conserve une certaine efficacité en cas de choc multiples.

L'objet de la présente invention est précisément de proposer un tel dispositif de protection, par l'utilisation, pour assurer le gonflement du sac, d'une faible quantité de gaz très chauds peu toxiques du fait qu'ils sont produits à une température qui ne correspond pas à la formation du monoxyde de carbone.

L'invention concerne donc un dispositif d'absorption de choc pour occupants d'un véhicule automobile constitué par un générateur pyrotechnique de gaz chauds comprenant un allumeur et une composition pyrotechnique et par un sac gonfable fixé au dit générateur, le dit sac gonfable communiquant avec le dit générateur par des moyens permettant de réduire la vitesse des gaz, le dit dispositif étant caractérisé en ce que les dits moyens comprennent au moins une ouverture de section constante ou quasi constante ainsi qu'un déflecteur disposés sur le générateur, en ce que le dit sac est un sac étanche ou quasi étanche, et en ce que la dite composition pyrotechnique brûle sans produire de poussières et a une température de flamme au moins égale à 1800°C, la température des gaz en sortie du générateur étant au moins égale à 1800°C.

Selon une variante préférée de l'invention ledit sac gonfable est réalisé dans un matériau choisi dans le groupe constitué par les fibres de polyamide.

Enfin l'invention concerne également l'utilisation de ce dispositif en combinaison avec une ceinture de sécurité.

L'originalité de l'invention réside dans le fait que, contrairement à l'enseignement général de l'art antérieur qui préconise de gonfler le sac de protection avec une grande quantité de gaz froids ou tièdes, le dispositif selon l'invention assure le gonflement du sac de protection avec une petite quantité de gaz le plus chaud possible et que l'on ne cherche pas à refroidir avant leur entrée dans le sac de protection. De par leur température élevée ces gaz assurent la pression suffisante pour assurer le gonflement du sac, mais en même temps ils se refroidissent très vite, leur masse totale étant faible, et assurent ainsi la diminution de volume conférant au sac des propriétés amortissantes dans toutes les configurations d'utilisation. Par ailleurs le sac étant étanche ou quasi étanche, il conserve une certaine efficacité même en cas de chocs multiples.

L'invention est maintenant décrite en détail en se référant aux figures 1 à 3 :
- La figure 1 représente, vu en coupe, un dispositif selon l'invention avant fonctionnement,
- La figure 2 représente, vue en coupe, le même dispositif en cours de fonctionnement,
- La figure 3 est une courbe représentant l'évolution de la pression en cours de fonctionnement dans le sac gonflable d'un dispositif selon l'invention.

Un dispositif 1 selon l'invention se compose essentiellement :
- d'un générateur pyrotechnique 2 de gaz chauds,
- d'un sac gonflable 3 fixé audit générateur 2,
- de moyens de communication entre ledit générateur et ledit sac gonflable.

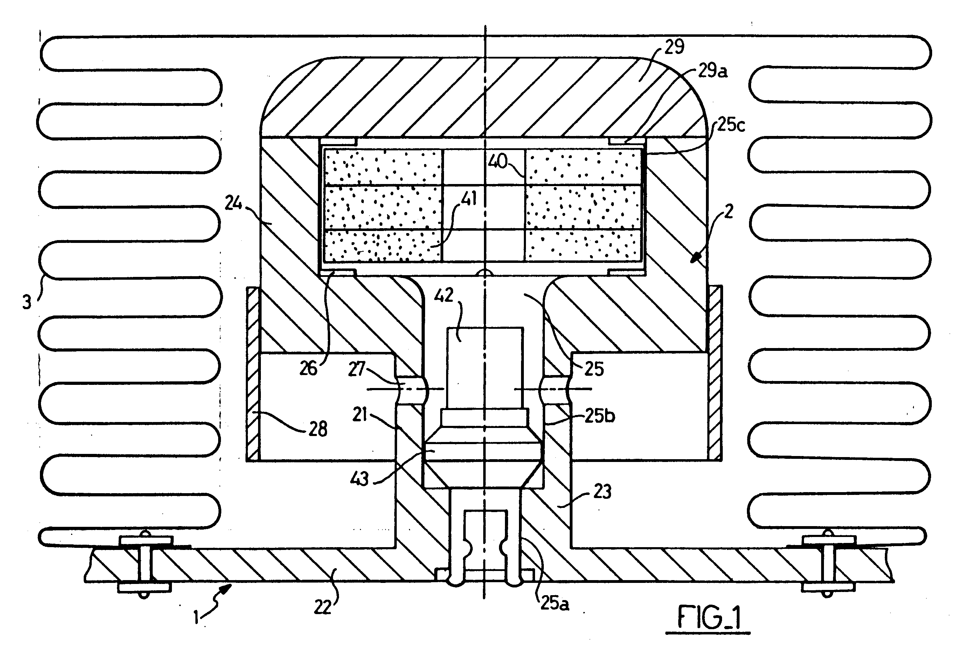

Le générateur 2 représenté à la figure 1 est constitué par un corps de révolution 21 comprenant une base cylindrique 22 surmontée d'un pied cylindrique 23 terminé par un réceptacle cylindrique 24, le diamètre extérieur du pied 23 étant inférieur aux diamètres extérieurs du réceptacle 24 et de la base 22. Ledit corps 21 est traversé par un alésage axial 25 comprenant trois parties de diamètres différents:
- une partie inférieure 25a située au niveau de la base 22 et de début du pied 23, de petit diamètre,
- une partie médiane 25b de diamètre supérieur à celui de la partie inférieure 25a.
- une partie supérieure 25c de diamètre supérieur à celui de la partie médiane 25b,
La partie supérieure 25c de l'alésage 25 est munie de nervures 26 et constitue la chambre de combustion du générateur tandis que la partie médiane 25b et la partie inférieure 25a constituent la chambre d'allumage du générateur.

Un couvercle 29 est fixé par exemple par soudure sur la face plane du réceptacle 24. Avantageusement, comme représenté à la figure 1, ce couvercle peut être muni des nervures 29a pénètrant dans la chambre de combustion 25c du générateur.

Le corps 21 du générateur et son couvercle 29 sont avantageusement constitués soit par un métal léger comme l'aluminium ou les alliages d'aluminium, soit par des matières plastiques susceptibles de régister pendant un temps très court à des températures élevées comme par exemple les matières plastiques chargées de fibres de verre ou de fibres de carbone ou encore les tissus de verre ou de carbone à matrice thermoplastique thermostable.

Le générateur doit, selon une première caractéristique essentielle de l'invention, produire des gaz chauds dont la température en sortie du générateur est au moins égale à 1800°C et de préférence voisine de 2000°C.

Pour cela on utilise une composition pyrotechnique génératrice de gaz dont la température de flamme est au moins égale à 1800°C. Comme composition pyrotechnique on préfèrera les poudres composites constituées par un liant organique tel qu'un polyuréthanne et par une nitramine comme l'hexogène ou l'octogène ou encore les poudres à double base constituées par un mélange de nitrocellulose et de nitroglycérine, ou certaines poudres à simple base à la nitrocellulose.

L'importance fondamentale dans le cadre de la présente invention de l'utilisation d'une composition génératrice de gaz très chauds sera expliquée plus loin dans la présente description.

On a représenté à la figure 1 un chargement 40 de composition génératrice de gaz chauds disposé à l'intérieur de la chambre de combustion 25c. Ce chargement est constitué par trois rondelles 41 de composition génératrice de gaz superposées l'une au-dessus de l'autre et calées par les nervures 26 et 29a portées par la chambre de combustion 25c et par le couvercle 29.

La mise à feu de la composition génératrice de gaz est assurée par un allumeur. On a représenté à la figure 1 un allumeur 42 disposé dans la partie inférieure 25a et dans la partie médiane 25b de l'alésage axial 25. Dans ce type de configuration l'allumeur 42 est introduit dans le corps 21 du générateur par la chambre de combustion 25c et coincé en force par sa partie large 43 dans la partie médiane 25b qui avantageusement peut avoir une section légèrement tronconique. Le chargement 40 est alors placé dans la chambre de combustion 25c et le couvercle 29 est ensuite fixé de manière étanche au corps 21.

Le générateur 2 est entouré par un sac gonflable 3 comme représenté à la figure 1. Ce sac gonflable doit pouvoir résister pendant un temps très court, pour les raisons qui seront expliquées plus loin dans la description, à la température élevée des gaz chauds produits par le générateur de gaz et est préférentiellement réalisé dans un matériau choisi dans le groupe constitué par les fibres de polyamide et plus généralement toute fibre de propriété équivalente.

Selon une seconde caractéristique essentielle de la présente invention ce sac doit être étanche ou quasi étanche.

Dans le cas où on utilise un sac étanche sa surface intérieure sera avantageusement recouverte d'un produit d'enduction imperméable aux gaz tel qu'une gomme ou encore un polymère néoprène. Dans certains cas on préfèrera cependant utiliser des sacs quasi étanches présentant une légère porosité. Dans cette hypothèse la surface intérieure du sac ne sera que partiellement recouverte de produit d'enduction où même en sera totalement exempte. Afin d'augmenter encore la porosité on pourra également prévoir de petits orifices traversant la paroi du sac gonflable.

Selon une variante de l'invention on peut également prévoir à l'intérieur du sac gonflable la présence de produits capables d'absorber ou de dissocier le monoxyde de carbone. De tels produits sont notamment constitués par du charbon actif ou par les mélanges d'oxydes de manganèse, de cuivre, de cobalt et d'argent comme par exemple le mélange commercialisé sous la marque "HOPCALITE"®.

Selon une troisième caractéristique essentielle de l'invention, ledit sac gonflable communique avec ledit générateur de gaz chauds par des moyens permettant de réduire la vitesse des gaz sans les refroidir sensiblement. En effet, pour les raisons qui vont être exposées un peu plus loin, il est essentiel dans le cadre de la présente invention, et ce contrairement à tout l'enseignement des brevets antérieurs qui faisaient appel à des générateurs de gaz chauds comme le brevet US 3 845 970, que les gaz qui entrent dans le sac gonflable soient le plus chaud possible et ne subissent aucun refroidissement par détente. Cette considération interdit notamment, dans le cadre de la présente invention, l'emploi de tuyères à col du type "convergent - divergent" pour assurer la communication entre le générateur de gaz chauds et le sac gonflable.

Selon une réalisation préférée de l'invention les moyens assurant la communication entre le sac gonflable et le générateur sont constitués par au moins une ouverture de section constante ou quasi constante disposée sur le corps ou le couvercle du générateur et par un déflecteur. Les ouvertures disposées sur le générateur sont calculées par l'homme de métier de manière à assurer une pression suffisante dans la chambre de combustion pour maintenir une vitesse de combustion compatible avec les temps de réponse exigés en sécurité automobile tout en évitant une déperdition trop importante de chaleur des gaz lors de l'impact de ces derniers contre le déflecteur. Elles sont de section constante ou faiblement variable - c'est ce qui est entendu au sens de la présente description par l'expression "quasi constante".

Le déflecteur a pour fonction d'assurer une pénétration des gaz chauds dans le sac sur tout le pourtour du générateur et d'éviter la pénétration de ces derniers sous forme de jets qui pourraient détériorer l'enveloppe du sac gonflable.

On a représenté à la figure 1 des ouvertures 27 de section circulaire constante disposées dans la partie médiane 25b de l'alésage 25 et dont les axes sont perpendiculaires à l'axe de l'alésage 25. Le déflecteur 28 est constitué par une paroi cylindrique fixée à la base du réceptacle 24 du corps 21 du générateur et venant en regard desdits orifices 27. Ces orifices 27 seront avantageusement operculés par un matériau facilement destructible par les gaz chauds, comme une feuille d'aluminium, de manière à favoriser l'allumage du chargement 40 et la montée en pression.

Le déflecteur peut être constitué par une pièce distincte du corps 21 du générateur et fixée à ce dernier comme représenté à la figure 1 ou encore être constitué par une partie intégrante de ce dernier. La base 22 du corps du générateur peut en particulier jouer le rôle de déflecteur dans le cas d'ouvertures à axes parallèles à celui de l'alésage 25 ou à axes inclinés par rapport à ce dernier.

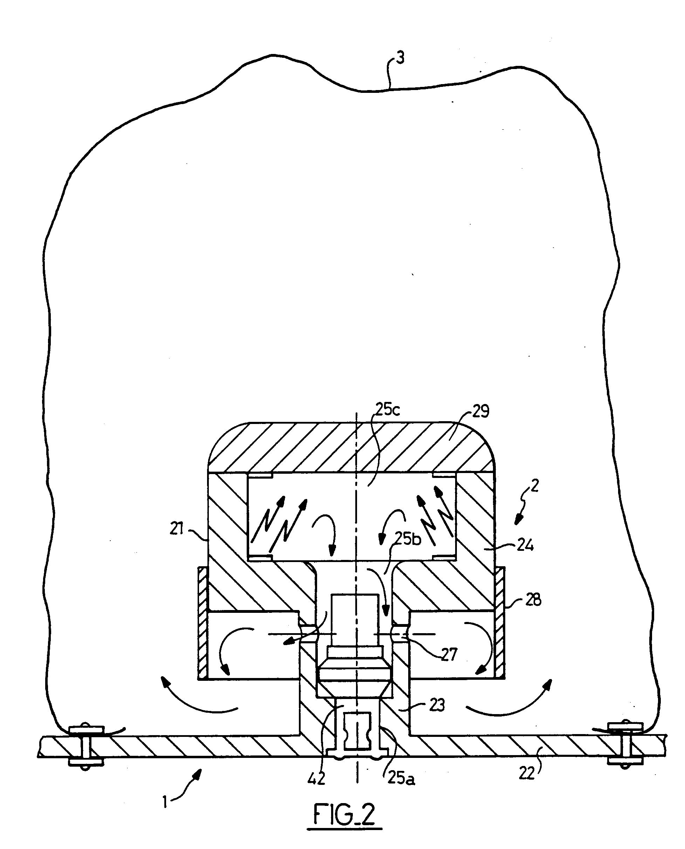

On décrit ci-après le fonctionnement du dispositif selon l'invention en se référant plus particulièrement à la figure 2.

En cas de nécessité une impulsion électrique déclenchée par un détecteur de collision non représenté sur les figures, met à feu l'allumeur 42 qui allume le chargement 40 de composition génératrice de gaz chauds.

Ces derniers quittent le générateur par les ouvertures 27, se répartissent sur toute la périphérie du générateur 2 grâce au déflecteur 28 et gonflent le sac 3. Il est à noter que dans ces conditions les gaz chauds provenant de la chambre de combustion ne subissent pratiquement aucune déperdition de chaleur. En effet d'une part, de par leur construction, les ouvertures 27 ne jouent par le rôle de tuyère et d'autre par le déflecteur 28 sert principalement à répartir les gaz sur toute la périphérie du générateur sans absorber une part importante d'énergie, le nombre et la surface des orifices 27 ayant été calculés pour éviter une vitesse de sortie des gaz trop élevée. Ce sont donc des gaz très chauds, à une température sensiblement égale à au moins 1800°C, qui pénètrent dans le sac gonflable 3.

Ce dernier se gonfle très rapidement et ce, même avec un faible nombre de molécules gazeuses. C'est là en effet qui se situe l'originalité fondamentale de l'invention : le gonflement du sac est assuré avec une faible quantité de gaz très chaud, nécessitant pour sa production une faible quantité de composition pyrotechnique par rapport aux quantités nécessitées, à volume de sac égal, avec des compositions génératrices de gaz froids comme les compositions à l'azoture, ou même des compositions génératrices de gaz chauds mais refroidis avant de pénétrer dans le sac. A titre indicatif pour gonfler un sac de 60 litres il faut 80g de composition à base d'azoture dans un dispositif traditionnel alors que moins de 16g de poudre à double base à la nitroglycérine et à la nitrocellulose suffisent avec un dispositif selon l'invention. Mais en même temps que le gonflement du sac est assuré, les gaz se refroidissent très vite dans le sac par échange thermique avec ce dernier, échange d'autant plus rapide que le gaz est présent en petite quantité seulement dans le sac. Il est à noter que l'élévation de température du sac reste modérée compte-tenu du rapport entre la masse du sac et celle des gaz qui est en générale supérieur à 10.

Par refroidissement des gaz le sac se dégonfle un peu, ce qui améliore l'amortissement du fait de la plus grande surface de contact entre l'occupant du véhicule automobile et le sac, et cela dès le premier choc. C'est pour améliorer les propriétés amortissantes du sac liées à son dégonflement partiel que l'on peut vouloir une certaine porosité pour l'enveloppe du sac.

Selon un mode d'exécution préféré de l'invention on utilise une quantité de gaz chauds telle que la pression relative atteinte dans le sac juste après le gonflement soit comprise entre 50 et 200 millibars (5 x 10³ Pa et 2 x 10⁴ Pa).

Il faut observer que même avec un sac présentant une certaine porosité il n'y a pas de risque lié à la toxicité des gaz pour les occupants du véhicule. En effet d'une part chaque sac est gonflé avec une faible quantité de gaz dont seulement une petite partie va se répandre dans le véhicule, et d'autre part les gaz contiennent peu de monoxyde de carbone car ils ont été produits à des températures qui correspondent plus à la formation du dioxyde de carbone qu'à la formation du monoxyde de carbone. La présence dans le sac de produits capables d'absorber ou de dissocier le monoxyde de carbone diminue par ailleurs encore les risques de toxicité.

Par ailleurs le sac étant soit complètement étanche, soit quasi étanche avec une légère porosité, il conserve dans tous les cas de figure suffisamment de gaz pour être encore amortissant en cas de chocs multiples successifs contrairement aux sacs traditionnels munis d'évents.

Deux avantages complémentaires du dispositif selon l'invention sont le poids et le prix du dispositif.

Le dispositif selon l'invention fonctionne avec une faible quantité de composition pyrotechnique comme il a été vu plus haut ce qui limite déjà son encombrement total et son poids. Par ailleurs les compositions génératrices de gaz chauds ne produisent pas de poussières, cela est notamment vrai pour les compositions préférées de l'invention à savoir les poudres composites et les poudres à simple ou double base. Le dispositif selon l'invention ne nécessite donc aucun système de filtration ce qui contribue grandement à diminuer son poids par rapport aux dispositifs traditionnels avec générateur de gaz froid. Cette réduction de poids s'accompagne bien sûr d'une réduction sensible du prix du dispositif selon l'invention par rapport auxdits dispositifs traditionnels.

Le dispositif selon l'invention convient bien à la protection de tous les occupants d'un véhicule automobile : conducteur ou passagers. Toutefois le dispositif selon l'invention trouve une application particulièrement intéressante en combinaison avec une ceinture de sécurité pour la protection du conducteur du véhicule. Cette application particulière fait également partie de la présente invention.

Dans les véhicules équipés de ceintures de sécurité, la protection des passagers est correctement assurée. Cependant celle du conducteur l'est moins, car le ceinture ne l'empêche pas dans tous les cas de heurter le volant et d'être ainsi gravement blessé.

Le dispositif selon l'invention, de par son faible encombrement, peut être très facilement logé dans le volant d'un véhicule automobile de manière à assurer, en cas de décélération très brutale, le gonflement d'un sac qui amortira le choc du conducteur en complément de la protection offerte par la ceinture. En pareille hypothèse, le sac gonflable peut d'ailleurs être un sac de volume réduit, un sac d'environ 30 litres convient bien dans ce cas, nécessitant un générateur de très faible volume. A titre indicatif un dispositif selon l'invention permet avec 8g de poudre à double base brûlant à 1800°C de gonfler efficacement un sac de 30 litres.

Exemple : on a réalisé un dispositif d'absorption de choc conforme à celui représenté à la figure 1.

Le générateur était en aluminium. Sa hauteur totale était de 46mm et le diamètre extérieur du réceptacle 24 était de 41mm.

Le chargement 40 était constitué par 3 rondelles de poudre à double base de dimensions suivantes :

| | |
|---|---|
| - diamètre extérieur | 30mm |
| - diamètre intérieur | 11mm |
| - épaisseur | 2,6mm |

La composition de la poudre était la suivante :

| | |
|---|---|
| - nitrocellulose | 55,5 parties en poids (taux d'azote : 11,7%) |
| - nitroglycérine | 37 parties en poids |
| - additifs | 7,5 parties en poids |

La témperature de flamme de cette composition est de 2300°C à 70 bars (7 x 10⁶Pa).

La générateur était muni de 4 ouvertures 27 ayant chacune un diamètre de 2mm.

Le sac était un sac de 30 litres en polyamide sans évent.

La surface intérieure du sac était non enduite.

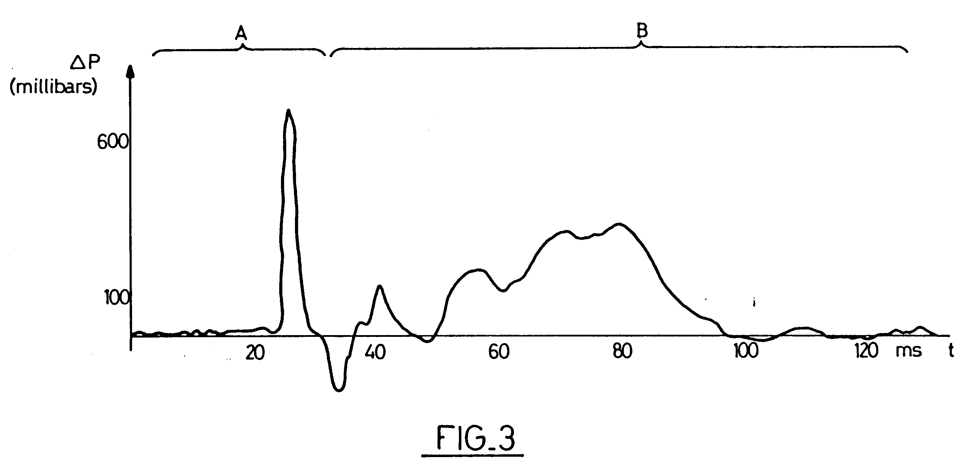

La courbe d'évolution de la pression dans le sac en fonction du temps est indiquée à la figure 3.

Cette courbe représente l'évolution de la différence de pression Δ P exprimée en millibars entre l'intérieur du sac gonflable 3 et la pression régnant à l'intérieur du véhicule en fonction du temps t exprimé en millisecondes à partir du déclenchement du dispositif.

L'essai a été réalisé en simulation de choc à 50 km/h en présence d'un mannequin muni d'une ceinture de sécurité.

La partie A de la courbe correspond au gonflement du sac tandis que la partie B correspondent à l'impact de la tête du mannequin sur le sac.

Au vu de cette courbe on constate que le dispositif selon l'invention assure un gonflement correct du sac au bout de 30 millisecondes environ (partie A de la courbe), et que le sac qui ne possède pas d'évent est alors capable d'amortir le choc de la tête du mannequin grâce en particulier au refroidissement concomittant des gaz.

Le critère H I C (Head Injury Criteria) utilisé dans la sécurité automobile est dans cet essai de 590, ce qui place le dispositif selon l'invention au niveau de performances des meilleurs dispositifs connus, en particulier de ceux avec évents.

## Revendications

1. Dispositif (1) d'absorption de choc pour occupants d'un véhicule automobile constitué par un générateur pyrotechnique (2) de gaz chauds comprenant un allumeur (42) et une composition pyrotechnique (40) et par un sac gonfable (3) fixé au dit générateur, le dit sac gonfable communiquant avec le dit générateur par des moyens permettant de réduire la vitesse des gaz, caractérisé en ce que les dits moyens comprennent au moins une ouverture (27) de section constante ou quasi constante ainsi qu'un déflecteur (28) disposés sur le générateur, en ce que le dit sac est un sac étanche ou quasi étanche, et en ce que la dite composition pyrotechnique brûle sans produire de poussières et a une température de flamme au moins égale à 1800°C, la température des gaz en sortie du générateur étant au moins égale à 1800°C.

2. Dispositif selon la revendication 1 caractérisé en ce que le sac gonfable est réalisé dans un matériau choisi dans le groupe constitué par les fibres de polyamide.

3. Dispositif selon la revendication 2 caractérisé en ce que au moins une partie du dit sac gonfable est poreuse

4. Dispositif selon la revendication 2 caractérisé en ce que le dit sac gonfable contient un produit capable d'absorber ou de dissocier le monoxyde de carbone.

5. Dispositif selon la revendication 4 caractérisé en ce que le dit produit est choisi dans le groupe constitué par le charbon actif et les oxydes de manganèse, de cuivre, de cobalt et d'argent.

6. Dispositif selon la revendication 5 caractérisé en ce que la dite composition pyrotechnique est choisie dans le groupe constitué par les poudres composites ou les poudres à double-base.

7. Dispositif selon la revendication 6 caractérisé en ce que la masse de composition pyrotechnique est voisine de 8g pour un sac de 30 litres.

8. Dispositif selon la revendication 4 caractérisé en ce que le dit générateur pyrotechnique (2) de gaz chauds comporte un corps de révolution (21) comprenant une base cylindrique (22) surmontée d'un pied cylindrique (23) terminé par un réceptacle cylindrique (24), le diamètre extérieur du pied (23) étant inférieur aux diamètres extérieurs du réceptacle (24) et de la base (22) et en ce que le dit corps (21) est traversé par un alésage axial (25) comprenant une partie inférieure (25a), une partie médiane (25b) et une partie supérieure (25c) de diamètres différents.

9. Dispositif selon la revendication 8 caractérisé en ce que l'allumeur (42) est disposé dans la partie inférieure (25a) et dans la partie médiane (25b) de l'alésage (25) et en ce que des ouvertures (27) de section circulaire constante sont disposées dans la partie médiane (25b) de l'alésage (25).

10. Dispositif selon l'une quelconque des revendications 1 à 9 caractérisé en ce que le corps (21) du générateur (2) est constitué par une matière plastique chargée de fibres de verre ou de carbone.

11. Utilisation du dispositif selon l'une quelconque des revendications 1 à 10 en combinaison avec une ceinture de sécurité.

## Claims

1. Impact absorption device (1) for occupants of a motor vehicle, consisting of a pyrotechnic hot-gas generator (2) comprising an igniter (42) and a pyrotechnic composition (40) and of an inflatable bag (3) fixed to the said generator, the said inflatable bag communicating with the said generator via means allowing reduction of the speed of the gases, characterized in that the said means comprise at least one opening (27) of constant or quasi-constant cross-section as well as a deflector (28) which are arranged on the generator, in that the said bag is a leaktight or quasi-leaktight bag, and in that the said pyrotechnic composition burns without producing dust and has a flame temperature at least equal to 1800°C, the temperature of the gases at the outlet of the generator being at least equal to 1800°C.

2. Device according to Claim 1, characterized in that the inflatable bag is made of a material chosen from the group consisting of polyamide fibres.

3. Device according to Claim 2, characterized in that at least a part of the said inflatable bag is porous.

4. Device according to Claim 2, characterized in that the said inflatable bag contains a product capable of absorbing or dissociating carbon monoxide.

5. Device according to Claim 4, characterized in that the said product is chosen from the group consisting of active charcoal and the oxides of manganese, copper, cobalt and silver.

6. Device according to Claim 5, characterized in that the said pyrotechnic composition is chosen from the group consisting of composite powders or double-base powders.

7. Device according to Claim 6, characterized in that the mass of the pyrotechnic composition is close to 8 g in the case of a 30 litre bag.

8. Device according to Claim 4, characterized in that the said pyrotechnic hot-gas generator (2) includes an axisymmetric body (21) comprising a cylindrical base (22) surmounted by a cylindrical stem (23) ending in a cylindrical container (24), the external diameter of the stem (23) being less than the external diameters of the container (24) and of the base (22), and in that the said body (21) is passed through by an axial bore (25) comprising a lower part (25a), a middle part (25b) and an upper part (25c) having different diameters.

9. Device according to Claim 8, characterized in that the igniter (42) is arranged in the lower part (25a) and in the middle part (25b) of the bore (25), and in that openings (27) of constant circular cross-section are arranged in the middle part (25b) of the bore (25).

10. Device according to any one of Claims 1 to 9, characterized in that the body (21) of the generator (2) consists of a plastic filled with glass or carbon fibres.

11. Use of the device according to any one of Claims 1 to 10 in combination with a seat belt.

## Patentansprüche

1. Stoßabsorbierende Vorrichtung (1) für Insassen eines Kraftfahrzeugs, bestehend aus einem pyrotechnischen Erzeuger (2) heißer Gase mit einem Zünder (42) und einer pyrotechnischen Zusammensetzung (40), und aus einem aufblasbaren Kissen (3), das an dem genannten Erzeuger befestigt ist, wobei das genannte Kissen mit dem genannten Erzeuger durch Mittel in Verbindung steht, durch die die Geschwindigkeit der Gase vermindert werden kann,
dadurch gekennzeichnet, daß die genannten Mittel mindestens eine Öffnung (27) mit gleichbleibendem oder nahezu gleichbleibendem Querschnitt sowie eine Ablenkplatte (28) umfassen, die an dem Gaserzeuger angeordnet sind, daß das genannte Kissen ein dichtes oder nahezu dichtes Kissen ist, und daß die genannte pyrotechnische Zusammensetzung ohne Pulverrückstände und bei einer Flammentemperatur von mindestens 1800 °C verbrennt, wobei die Temperatur der aus dem Erzeuger austretenden Gase mindestens 1800 °C beträgt.

2. Vorrichtung nach Anspruch 1,
dadurch gekennzeichnet, daß das aufblasbare Kissen aus einem Material aus der Gruppe der Polyamidfasern besteht.

3. Vorrichtung nach Anspruch 2,
dadurch gekennzeichnet, daß mindestens ein Teil des genannten aufblasbaren Kissens porös ist.

4. Vorrichtung nach Anspruch 2,
dadurch gekennzeichnet, daß das genannte aufblasbare Kissen eine Substanz enthält, die geeignet ist, das Kohlenmonoxid zu absorbieren oder aufzuspalten.

5. Vorrichtung nach Anspruch 4,
dadurch gekennzeichnet, daß die genannte Substanz aus der Gruppe der aktiven Kohle und der Mangan-, Kupfer- Kobalt- und Silberoxidgemische gewählt ist.

6. Vorrichtung nach Anspruch 5,
dadurch gekennzeichnet, daß die genannte pyrotechnische Zusammensetzung aus der Gruppe der Kompositpulver oder der Pulver mit zwei Basiskomponenten gewählt ist.

7. Vorrichtung nach Anspruch 6,
dadurch gekennzeichnet, daß die Masse der pyrotechnischen Zusammensetzung bei einem 30-Liter-Kissen etwa 8 g beträgt.

8. Vorrichtung nach Anspruch 4,
dadurch gekennzeichnet, daß der genannte pyrotechnische Erzeuger (2) heißer Gase aus einem Rotationskörper (21) mit einer zylindrischen Basis (22) besteht, von der sich ein zylindrischer Fuß (23) nach oben erstreckt, welcher an einem zylindrischen Behältnis (24) endet, wobei der Außendurchmesser des Fußes (23) kleiner ist als die Außendurchmesser des Behältnisses (24) und der Basis (22), und daß durch den genannten Körper (21) eine axiale Bohrung (25) verläuft, die einen unteren Abschnitt (25a), einen mittleren Abschnitt (25b) und einen oberen Abschnitt (25c) mit verschiedenen Durchmessern umfaßt.

9. Vorrichtung nach Anspruch 8,
dadurch gekennzeichnet, daß der Anzünder (42) in dem unteren Abschnitt (25a) und in dem mittleren Abschnitt (25b) der Bohrung (25) angeordnet ist und daß die Öffnungen (27) mit gleichbleibendem, kreisförmigen Querschnitt in dem mittleren Abschnitt (25b) der Bohrung (25) angeordnet sind.

10. Vorrichtung nach einem der Ansprüche 1 bis 9,
dadurch gekennzeichnet, daß der Körper (21) des Gaserzeugers (2) aus einem glasfaserhaltigen oder kohlenstoffaserhaltigen Kunststoff besteht.

11. Anwendung der Vorrichtung nach einem der Ansprüche 1 bis 10 in Kombination mit einem Sicherheitsgurt.
